# EUROPÄISCHE PATENTSCHRIFT

(11) **EP 3 146 608 B1**
(45) Veröffentlichungstag und Bekanntmachung des Hinweises auf die Patenterteilung: **12.12.2018**
(21) Anmeldenummer: 15721569.0
(22) Anmeldetag: 17.04.2015
(51) Int. Cl.: H02J 3/38

(54) **SYSTEM ZUR EINSPEISUNG ELEKTRISCHER ENERGIE IN EIN STROMVERSORGUNGSNETZ**
SYSTEM FOR FEEDING ELECTRICITY TO AN ELECTRICAL GRID
SYSTÈME DESTINÉ À INJECTER DE L'ÉNERGIE ÉLECTRIQUE DANS UN RÉSEAU DE DISTRIBUTION D'ÉNERGIE

(30) Priorität: 22.05.2014 DE 102014007639
(43) Veröffentlichungstag der Anmeldung: 29.03.2017
(73) Patentinhaber: Amk Arnold Müller GmbH & Co. KG, 73230 Kirchheim/Teck (DE)
(72) Erfinder: GAUSE, Alfred, 73666 Baltmannsweiler (DE); PFAFF, Bernhard, 73230 Kirchheim/Teck (DE)
(74) Vertreter: Spachmann, Holger
(86) Internationale Anmeldenummer: PCT/EP2015/000807
(87) Internationale Veröffentlichungsnummer: WO 2015/176790

(56) Entgegenhaltungen:
- EP-A1- 2 670 041
- DE-A1- 10 210 099
- DE-U1-202012 008 606
- DE-U1-202013 010 116
- US-A1- 2012 176 088

## Beschreibung

Die Erfindung betrifft ein System zur Einspeisung elektrischer Energie in ein Stromversorgungsnetz. Derartige Systeme werden beispielsweise eingesetzt für die Einspeisung der mit einer Photovoltaikanlage gewonnenen elektrischen Energie in das Niederspannungs-Stromversorgungsnetz. Dabei wird jedem Solarmodul als Teil der Photovoltaikanlage ein Wechselrichter zugeordnet, der die photovoltaische Gleichspannung in eine stromnetzsynchrone Wechselspannung umwandelt.

In der DE 102 10 099 A1 wird ein Inselnetz und ein entsprechendes Betriebsverfahren offenbart, wobei an einem Gleichspannungs-Zwischenkreis eingangsseitig verschiedene Stromgeneratoren wie Windenergieanlagen über Gleichrichter und Photovoltaikelemente über Hochsetzsteller angeschlossen sind. Weiterhin ist ein Akkumulator- oder Kondensatorblock über eine Lade-/Entladeschaltung an den Zwischenkreis angeschlossen, um zumindest kurzfristig Energie speichern und abgeben zu können. Der Zwischenkreis ist ausgangsseitig über einen Wechselrichter mit einem Stromversorgungsnetz zur Energieeinspeisung verbunden.

Aus der US 2012/176088 A1 ist ein Energieversorgungsnetz bekannt, bei dem Energie aus einem Energieerzeugungssystem über einen Gleichrichter in einen Zwischenkreis geleitet wird. Über einen Wechselrichter und eine Kaskade von zwei Schaltelementen wird die Energie in ein Energienetz abgegeben. Eine Stützbatterie im Zwischenkreis kann über einen Spannungswandler aufgeladen werden und Energie an den Zwischenkreis abgeben.

Die DE 20 2013 010 116 U1 offenbart eine Reihe von Fitnessfahrrädern, die jeweils mit einem elektrischen Stromgenerator ausgerüstet sind, der jeweils über einen Gleichrichter Energie an einen Zwischenkreis liefern können. Über einen Wechselrichter kann Energie in ein Drehstromnetz abgegeben werden.

Durch die DE 20 2012 008 606 U1 wird ein Solarspeichersystem mit einer Mehrzahl von Solarmodulen offenbart, die über Emulatoren elektrische Energie in einen Zwischenkreis einspeisen. Über einen oder mehrere Umrichter kann die Energie an ein oder mehrere Stromversorgungsnetze abgegeben werden. Der Erfindung liegt die Aufgabe zugrunde, ein verbessertes System bereitzustellen, welches es ermöglicht, elektrische Energie, die als Gleichspannung oder Wechselspannung aus verschiedenen Energieträgern gewonnen werden kann, auf effiziente Weise in das Stromversorgungsnetz einzuspeisen und dabei die Energiebilanz des System zu verbessern. In einer Ausführungsart soll der apparatetechnische Aufwand für die Einspeisung der aus verschiedenen Energieträgern gewonnenen elektrischen Energie reduziert sein und dabei dennoch mit reduziertem externem Steueraufwand eine hohe Verfügbarkeit des Systems gewährleistet sein.

Diese Aufgabe ist durch das im Anspruch 1 bestimmte System gelöst. Besondere Ausführungsarten der Erfindung sind in den Unteransprüchen bestimmt.

Erfindungsgemäß weist das System einen Gleichspannungs-Zwischenkreis auf, mit dessen Eingangsseite mehrere Stromgeneratoren und/oder Stromspeicher über jeweils einen Stromrichter verbindbar sind, und dessen Ausgangsseite über einen Wechselrichter mit dem Stromversorgungsnetz verbindbar ist.

Erfindungsgemäß wird die Abwärme von Komponenten des Systems, der Stromrichter oder des Wechselrichters in den Wärmekreis eingespeist. Aus dem Wärmekreis können Wärmetauscher gespeist werden, beispielsweise zum Heizen von Räumen oder zum Aufwärmen von Leitungswasser. Weiterhin kann die im Wärmekreis anstehende Wärmeenergie zum Temperieren von elektrochemischen Energiespeichern eingesetzt werden, um deren Leistungsfähigkeit auch bei geringen Außentemperaturen zu erhöhen.

Bei den Stromgeneratoren kann es sich beispielsweise um Photovoltaik-Module oder Brennstoffzellen handeln, oder um mechanisch-elektrische Generatoren beispielsweise von Windkraftanlagen, Wasserrädern oder Brennkraftmaschinen, die auch Teil eines Blockheizkraftwerkes oder einer Biogasanlage sein können. Bei den Stromspeichern kann es sich beispielsweise um vorzugsweise wiederaufladbare Speicher für elektrische Energie auf elektrochemischer Basis handeln. Bei den Stromrichtern auf der Eingangsseite des Zwischenkreises kann es sich um Gleichspannungswandler handeln, insbesondere für den Anschluss von Photovoltaikmodulen oder elektrochemischen Energiespeichern, oder um Wechselrichter, vorzugsweise bidirektionale Wechselrichter, oder um Gleichrichter, insbesondere für den Anschluss von mechanisch-elektrischen Generatoren.

Ein besonderer Vorteil des erfindungsgemäßen Systems besteht darin, dass die aus verschiedenen Energieträgern gewonnene elektrische Energie auf einem gemeinsamen Zwischenkreis zusammengeführt ist. Dies ermöglicht eine zentrale Steuerung der Einspeisung der aus verschiedenen Energieträgern gewonnenen elektrischen Energie. Dadurch kann die Verfügbarkeit des Systems erhöht werden, insbesondere kann mit einem solchen System tagsüber die photovoltaisch gewonnene Energie eingespeist werden und nachts oder bei nicht ausreichender Sonneneinstrahlung können vom System autark andere Energieformen zur Einspeisung herangezogen werden, beispielsweise durch Verbrennen von Biogas oder sonstigen Biokraftstoffen und Betrieb eines mechanisch-elektrischen Generators, oder auch durch Entnahme von Energie aus einem elektrochemischen Energiespeicher.

In einer Ausführungsart beträgt die elektrische Spannung auf dem Gleichspannungs-Zwischenkreis mehr als 200 V, insbesondere mehr als 300 V und vorzugsweise mehr als 400 V. In einer besonderen Ausführungsart beträgt die Spannung zwischen 500 V und 800 V, insbesondere etwa 600 V. Dadurch ist besonders vorteilhaft die aus verschiedenen Energieträgern gewonnene elektrische Energie auf effiziente Weise in das Stromversorgungsnetz einspeisbar. So beträgt beispielsweise die Spannungsebene der in Elektroautos eingesetzten Hochvolt-Batterien zwischen 400 V und 600 V. Auch die mechanisch-elektrischen Generatoren können problemlos Spannungen in dieser Höhe generieren. Dadurch können die Wandlerverluste beim Anschluss der Stromgeneratoren an den Zwischenkreis minimiert werden. Außerdem sind die Wandlerverluste auf der Wechsel richterseite des Hochvolt-Gleichspannungs-Zwischenkreises für das Einspeisen der elektrischen Energie in das Stromversorgungsnetz, das beispielsweise ein öffentliches 230/380 V Niederspannungsnetz sein kann, ebenfalls minimal.

In einer Ausführungsart weist das System auf der Eingangsseite des Gleichspannungs-Zwischenkreises mindestens einen DC/DC-Gleichspannungswandler auf, durch den ein Photovoltaik-Stromgenerator oder ein elektrochemischer Stromspeicher mit dem Gleichspannungs-Zwischenkreis verbindbar ist. Das System kann auf der Eingangsseite des Gleichspannungs-Zwischenkreises weiterhin einen Gleichrichter oder einen bidirektionalen Wechselrichter aufweisen, durch den ein mechanisch-elektrischer Stromgenerator mit dem Gleichspannungs-Zwischenkreis verbindbar ist, beispielsweise ein Synchron-Generator, insbesondere ein permanent-erregter Synchron-Generator, oder ein Asynchrongenerator. Alternativ oder ergänzend kann das System einen weiteren Gleichspannungswandler aufweisen, durch den ein weiterer Photovoltaik-Stromgenerator oder ein weiterer Stromspeicher mit dem Gleichspannungs-Zwischenkreis verbindbar ist.

Der Gleichspannungswandler für Energiespeicher ist dabei bidirektional, so dass durch das System elektrische Energie sowohl aus dem Energiespeicher entnehmbar und in das Stromversorgungsnetz einspeisbar ist als auch in den Energiespeicher einspeicherbar ist, vorzugsweise auch dann, wenn das System nicht an das Stromversorgungsnetz angeschlossen ist, aber beispielsweise durch Photovoltaik-Generatoren elektrische Energie erzeugt wird und zur Speicherung zur Verfügung steht. In einer Ausführungsart kann das System autark unter Berücksichtigung des Ladezustandes des Energiespeichers entscheiden, ob die vom Stromgenerator erzeugte elektrische Energie in das Stromversorgungsnetz eingespeist wird oder in dem Energiespeicher gespeichert wird.

Der Wechselrichter auf der Ausgangsseite des Gleichspannungs-Zwischenkreises erzeugt die für das Einspeisen der auf dem Zwischenkreis anstehenden elektrischen Energie in das Stromversorgungsnetz erforderliche netzsynchrone Wechselspannung, wobei der Wechselrichter vorzugsweise einen steuerbaren Blindleistungsanteil bereitstellt. Die Stromrichter und/oder der Wechselrichter können mit dem System verbindbare Komponenten oder in einer Ausführungsart auch Bestandteil des Systems sein.

In einer Ausführungsart umfasst das Stromversorgungsnetz ein öffentliches Stromversorgungsnetz und ein lokales Netz, die beide mit dem Wechselrichter verbindbar sind. Das System weist einen zwischen dem Wechselrichter und dem öffentlichen Stromversorgungsnetz angeordneten steuerbaren Trennschalter auf, mittels dem der Wechselrichter vorzugsweise allpolig vom öffentlichen Stromversorgungsnetz trennbar ist.

Dadurch kann das System autark, beispielsweise bei Erkennen einer Störung auf dem öffentlichen Stromversorgungsnetz oder bei Ausfall des öffentlichen Stromversorgungsnetzes, und/oder manuell oder automatisch gesteuert das System vom öffentlichen Stromversorgungsnetz trennen und anschließend in einem Inselnetz-Betriebsmodus die elektrische Energie lediglich in das lokale Netz einspeisen.

In einer Ausführungsart ist der Wechselrichter über eine Signal- oder Netzverbindungsleitung mit dem öffentlichen Stromversorgungsnetz verbunden. Dadurch ist ein Ausfall des öffentlichen Stromversorgungsnetzes automatisch von dem Wechselrichter und damit von dem System detektierbar. Die Netzverbindungsleitung kann manuell trennbar sein, beispielsweise um zu Testzwecken einen Netzausfall zu simulieren oder zur beabsichtigten Trennung des Systems vom öffentlichen Stromversorgungsnetz und Übergang zu einem Inselnetz-Betriebsmodus.

In einer Ausführungsart weist das System eine Steuereinheit auf, die steuerungstechnisch mit den auf der Eingangsseite des Gleichspannungs-Zwischenkreises angeordneten Stromrichtern und/oder mit dem auf der Ausgangsseite des Gleichspannungs-Zwischenkreises angeordneten Wechselrichter verbunden ist. Bei der Steuereinheit kann es sich um eine zentrale Steuereinheit des Systems handeln, die autark, d.h. auch ohne Steuersignale einer übergeordneten Netzsteuerung, den Betrieb des gesamten Systems steuert, einschließlich des Einschaltens und Ausschaltens des Systems und/oder des Einspeisens elektrischer Energie in das Stromversorgungsnetz und/oder des Trennens des Systems von dem Stromversorgungsnetz. Die Steuereinheit kann die elektrischen Parameter der einzuspeisenden Energie steuern, beispielsweise Spannung, Frequenz, Phasenlage und/oder Blindleistungsanteil. Alternativ oder ergänzend kann die Steuereinheit die elektrische Belastung der Stromgeneratoren und/oder der Energiespeicher steuern.

Die Steuereinheit kann dabei zentral innerhalb des Systems lokalisiert sein, oder dezentral und beispielsweise auf die Stromrichter und/oder den ausgangsseitigen Wechselrichter verteilt sein. Insbesondere können die Stromrichter und/oder der Wechselrichter Steuermodule aufweisen, mit denen beispielsweise die Stromgeneratoren lastabhängig regelbar sind oder asymmetrische Lasten bewältigbar sind, wobei die dezentral und verteilt in dem System angeordneten Steuermodule Teil der Steuereinheit sein können.

In einer Ausführungsart weist die Steuereinheit eine Schnittstelle für den Anschluss an ein vorzugsweise öffentliches Datennetz auf und kann über das Datennetz bidirektional Daten mit einem Terminal austauschen, das mit dem Datennetz verbunden ist. Die Schnittstelle ermöglicht dadurch eine internetbasierte oder webbasierte Bedienfunktion auf dem Terminal, bei dem es sich beispielsweise um einen Personal Computer, einen Tablet-Computer oder auch um ein Smartphone handeln kann. Damit kann ein gegebenenfalls auch mobiler und nicht am Ort des Systems oder der Stromgeneratoren lokalisierter Anwender den Betrieb des Systems überwachen und erforderlichenfalls Steuereingriffe vornehmen.

In einer Ausführungsart ist die Steuereinheit zum Zweck ihrer Spannungsversorgung mit dem Gleichspannungs-Zwischenkreis verbunden. Vorteilhaft ist dabei, dass die Steuereinheit keine externe Stromversorgung benötigt, sondern autark betriebsfähig ist. Außerdem kann der Energieverbrauch des Systems im ausgeschalteten Zustand reduziert werden. Auch die Stromrichter und der Wechselrichter können ihre Spannungsversorgung und damit ihre Energieversorgung aus dem Zwischenkreis entnehmen.

In einer Ausführungsart weist das System eine Spannungsversorgungseinheit auf, insbesondere ein Schaltnetzteil, die eingangsseitig mit dem Gleichspannungs-Zwischenkreis verbunden ist und ausgangsseitig mit der Steuereinheit und/oder mit den Stromrichtern und/oder mit dem Wechselrichter verbunden ist. Die Spannungsversorgungseinheit kann insbesondere eine Versorgungsspannung für das gesamte System bereitstellen, beispielsweise mindestens eine DC-Niederspannung mit einer Spannungsebene von weniger als 60 V, insbesondere 24 V. Daran können alle Komponenten des Systems angeschlossen sein, die mit einer solchen Versorgungsspannung betriebsfähig sind, beispielsweise die Stromrichter, der Wechselrichter oder auch Module zur Kompensation oder zum Ausgleich einer Asymmetrie der elektrischen Last durch das angeschlossene Stromversorgungsnetz.

Ferner weist das System erfindungsgemäß neben dem elektrischen Zwischenkreis auch einen gemeinsamen Wärmekreis auf, in dem die Wärmemedien und/oder Kühlmedien von mehreren und vorzugsweise von allen an das System anschließbaren Stromgeneratoren zusammenführbar sind. Beispielsweise kann die Abwärme einer an das System angeschlossenen Brennkraftmaschine oder eines gesamten Blockheizkraftwerks und/oder auch die Abwärme der elektrischen Generatoren oder Energiespeicher in dem gemeinsamen Wärmekreis zusammenführbar sein.

Das System kann hierzu mehrere und vorzugsweise absperrbare Wärmemedienanschlüsse aufweisen für den Anschluss verschiedener Wärmemedien oder Kühlmedien. Der Wärmekreis kann auch mehrere Temperaturebenen aufweisen, beispielsweise einen ersten Teilwärmekreis, in den Wärmemedien mit einer höheren Temperatur einspeisbar sind, und einen zweiten Teilwärmekreis, in den Wärmemedien mit einer geringeren Temperatur einspeisbar sind, um die Wärmeenergie optimal zu nutzen. Das System kann auch einen thermisch isolierten Wärmemedienspeicher aufweisen, in dem die in das System eingespeiste Wärmeenergie über einen längeren Zeitraum speicherbar ist.

Weitere Vorteile, Merkmale und Einzelheiten der Erfindung ergeben sich aus den Unteransprüchen und der nachfolgenden Beschreibung, in der unter Bezugnahme auf die Zeichnungen mehrere Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein.
Fig. 1 zeigt ein Ausführungsbeispiel eines erfindungsgemäßen Systems, und
Fig. 2 bis 4 zeigen verschiedene Betriebszustände eines weiteren Ausführungsbeispiels des erfindungsgemäßen Systems.

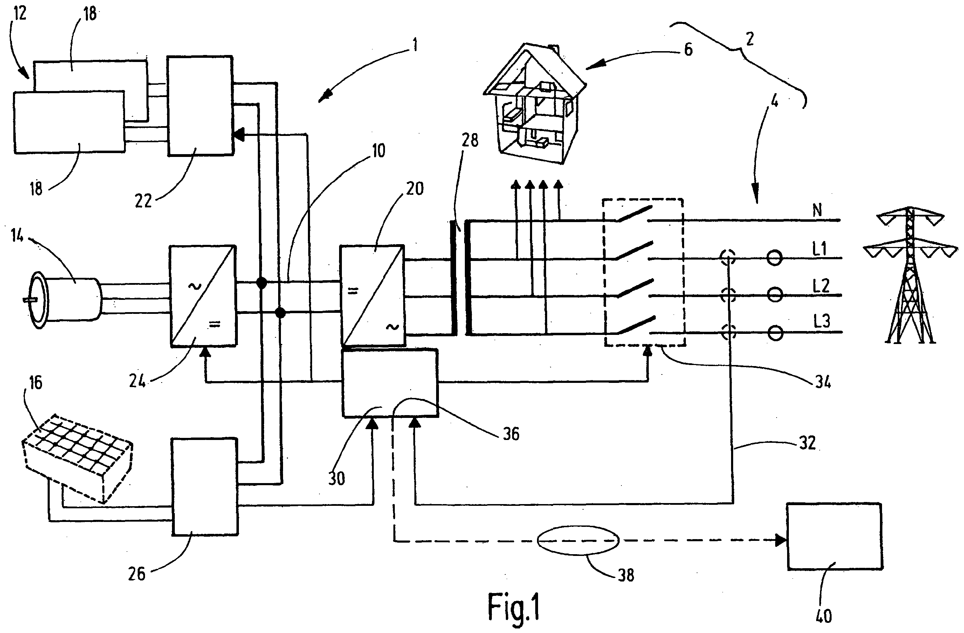

Die Fig. 1 zeigt ein Ausführungsbeispiel eines erfindungsgemäßen Systems 1 zur Einspeisung elektrischer Energie in ein Stromversorgungsnetz 2. Das Stromversorgungsnetz 2 besteht im Ausführungsbeispiel aus einem öffentlichen dreiphasigen Stromversorgungsnetz 4 und einem lokalen dreiphasigen Netz 6, beispielsweise für die Versorgung eines Wohnhauses oder eines landwirtschaftlichen Betriebes. Beide Teilnetze 4, 6 weisen eine übereinstimmende Niederspannungsebene 230/380 V auf.

Das System 1 weist einen elektrischen Zwischenkreis 10 auf, im Ausführungsbeispiel einen Gleichspannungs-Zwischenkreis, mit dessen Eingangsseite im Ausführungsbeispiel zwei Stromgeneratoren 12, 14 und ein Stromspeicher 16 über jeweils einen Stromrichter 22, 24, 26 verbunden sind, und dessen Ausgangsseite über einen ausgangsseitigen Stromrichter 20, im Falle eines Gleichspannungs-Zwischenkreises über einen Dreiphasen-Wechselrichter, mit dem Stromversorgungsnetz 2 verbindbar ist. Das System 1 ist modular aufgebaut und kann insbesondere in der Art eines Baukastens um weitere Stromrichter für den Anschluss weiterer Stromgeneratoren oder Stromspeicher erweitert werden.

Der erste Stromgenerator 12 weist zwei Solarmodule 18 auf, die gemeinsam an einen ersten Stromrichter 22 angeschlossen sind, bei dem es sich im Ausführungsbeispiel um einen Gleichspannungswandler (DC/DC) handelt, der die von den Solarmodulen 18 erzeugte Gleichspannung unidirektional an den Zwischenkreis 10 angekoppelt.

Bei dem zweiten Stromgenerator 14 handelt es sich um einen vorzugsweise permanenterregten Synchrongenerator, der konvektionsgekühlt oder flüssigkeitsgekühlt sein kann; alternativ oder ergänzend kann auch ein Asynchrongenerator als Stromgenerator eingesetzt werden. Der zweite Stromgenerator 14 kann beispielsweise durch eine Brennkraftmaschine angetrieben sein, die wiederum mit Biogas oder einem sonstigen biologisch erzeugten oder auch einem fossilen Brennstoff betrieben sein kann. Alternativ hierzu kann der zweite Stromgenerator 14 auch beispielsweise durch einen Windrad oder eine Wasserturbine angetrieben sein. Der zweite Stromgenerator 14 liefert im Ausführungsbeispiel eine dreiphasige Wechselspannung, die mittels des zweiten Stromrichters 24 in eine Gleichspannung gewandelt wird, wobei der zweite Stromrichter 24 mit seinem Gleichspannungsausgang an den Zwischenkreis 10 angeschlossen ist. Der zweite Stromrichter 24 kann zur optimalen Energieausnutzung sensorlos eine lastabhängige Vektorregelung des zweiten Generators 14 aufweisen.

Bei dem Stromspeicher 16 handelt es sich im Ausführungsbeispiel um eine Batterie von elektrochemischen Energiespeichern, beispielsweise um eine Hochvoltbatterie mit einer Nennspannung von mehr als 100 V, im Ausführungsbeispiel von etwa 400 V. Der Stromspeicher 16 ist über den dritten Stromrichter 26, bei dem es sich um einen bidirektionalen Gleichspannungswandler handelt, mit dem Zwischenkreis 10 verbunden.

Ausgangsseitig ist der Zwischenkreis 10 über einen ausgangsseitigen Stromrichter 20, bei dem es sich im Ausführungsbeispiel um einen Wechselrichter handelt, der die Gleichspannung des Zwischenkreises 10 in eine dreiphasige Wechselspannung wandelt, mit dem Energieversorgungsnetz 2 verbunden. Der ausgangsseitige Stromrichter 20 kann dabei innerhalb seines Leistungsbereiches einen beliebigen Blindleistungsanteil für das Stromversorgungsnetz 2 bereitstellen, den das System 1 automatisch regeln kann. Die Aufschaltung auf das Stromversorgungsnetz 2 erfolgt vollautomatisch. Zur Kompensation einer gegebenenfalls phasenunsymmetrischen Belastung des Stromversorgungsnetzes 2 kann das System 1 Symmetrierelemente aufweisen. Zwischen dem ausgangsseitigen Stromrichter 20 und dem Stromversorgungsnetz 2 ist ein Transformator 28 angeordnet.

Das System 1 weist eine Steuereinheit 30 auf, die über unidirektionale oder bidirektionale Steuerleitungen mit den eingangsseitigen Stromrichtern 22, 24, 26 und mit dem ausgangsseitigen Stromrichter 20 verbunden ist. Im Ausführungsbeispiel ist die Steuereinheit 30 unmittelbar am ausgangsseitigen Stromrichter 20 angeordnet oder sogar in Baueinheit mit diesem ausgebildet. Die Steuereinheit 30 ist weiterhin über eine Netzverbindungsleitung 32 mit dem öffentlichen Stromversorgungsnetz 4 verbunden und kann daher eine Störung oder einen Ausfall des öffentlichen Stromversorgungsnetzes 4 detektieren. Außerdem ist die Steuereinheit 30 mit einem Trennschalter 34 verbunden und kann in einem Störungsfall das System 1 vorzugsweise allpolig vom öffentlichen Stromversorgungsnetz 4 trennen. Weiterhin weist die Steuereinheit 30 eine gegebenenfalls auch drahtlose Schnittstelle 36 für den Anschluss an ein öffentliches Datennetz 38 auf. Über das öffentliche Datennetz 38 kann die Steuereinheit 30 vorzugsweise bidirektional Daten mit einem Terminal 40 austauschen, das mit dem öffentlichen Datennetz 38 verbunden ist.

Parallel zu dem elektrischen Zwischenkreis 10 kann das System 1 einen in der Fig. 1 nicht dargestellten Wärmekreis aufweisen, der ähnlich verzweigt sein kann wie der elektrische Zwischenkreis 10, insbesondere können an den Wärmekreis mehrere oder sogar alle Stromrichter 20, 22, 24, 26 angeschlossen sein und ihre Abwärme an den Wärmekreis abführen. Ergänzend können auch die Stromgeneratoren 12, 14 und/oder der Stromspeicher 16 an den Wärmekreis angeschlossen sein. Der Wärmekreis des Systems 10 kann als thermische Energiequelle entweder lediglich innerhalb des Systems 1 eingesetzt sein oder einen Anschluss an ein weiterführendes Wärmenetz aufweisen, insbesondere an ein lokales Wärmenetz, zur Versorgung beispielsweise von Wohnräumen oder zur Warmwasserbereitstellung.

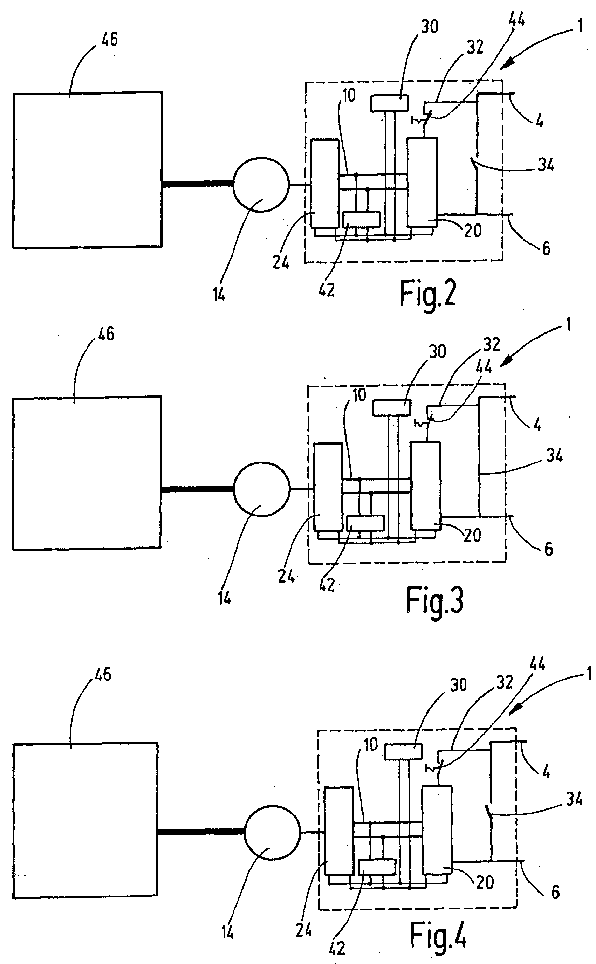

Die Figuren 2 bis 4 zeigen verschiedene Betriebszustände eines weiteren Ausführungsbeispiels des erfindungsgemäßen Systems 1. Die Fig. 2 zeigt das System 1 beispielsweise in einem ausgeschalteten Zustand, in dem das System 1 keine externe Energieversorgung benötigt. Obwohl der Trennschalter 34 geöffnet ist, erkennt das System 1 über die Netzverbindungsleitung 32 das Vorhandensein eines öffentlichen Stromversorgungsnetzes 4. In der Netzverbindungsleitung 32 ist ein manuell oder automatisch von der Steuereinheit 30 des Systems 1 zu betätigender Schalter 44 angeordnet, der im Zustand der Fig. 2 geschlossen ist. Der geschlossene Zustand des Schalters 44 gibt der Steuereinheit 30 die Möglichkeit, nach dem Anlaufen des Systems 1 auf die Netzspannung zu synchronisieren und den Trennschalter 34 zu schließen und damit einen Netzparallelbetrieb zu fahren. Demgegenüber signalisiert ein geöffneter Schalter 44, dass kein Netzparallelbetrieb möglich oder gewünscht ist, sondern ein isolierter Betrieb des lokalen Netzes 6, indem das System 1 lediglich mit dem lokalen Netz 6 verbunden ist.

Eingangsseitig ist an das System 1 über den zweiten Stromrichter 24 der zweite Stromgenerator 14 angeschlossen, der im dargestellten Ausführungsbeispiel von einer Brennkraftmaschine 46 angetrieben ist.
An den Zwischenkreis 10 ist eine Spannungsversorgung 42 angeschlossen, welche auf Ihre Ausgangsseite eine Gleichspannung von im Ausführungsbeispiel 24 V als Systemspannung bereitstellt, mit der die verschiedenen Komponenten und elektrischen Betriebsmittel des Systems 1 mit elektrischer Energie versorgt werden. Im Ausführungsbeispiel handelt es sich bei der Spannungsversorgung 42 um ein Schaltnetzteil.

Wenn ausgehend vom Betriebszustand der Fig. 2 die Brennkraftmaschine 46 anläuft und Energie in das System 1 einträgt, vergleichbar mit der Einstrahlung von Sonnenlicht auf ein Photovoltaikmodul, erzeugt der zweite Stromgenerator 14 zunächst ungesteuert eine elektrische Spannung auf den Zwischenkreis 10. Daraufhin wird die Spannungsversorgung 42 aktiviert, die wiederum ausgangsseitig die Versorgungsspannung für die Komponenten und Betriebsmittel des Systems 1 bereitstellt, unter anderem für die Steuereinheit 30. Daraufhin erkennt die Steuereinheit 30 über die Netzverbindungsleitung 32 das Anstehen des öffentlichen Stromnetzes 4 und schließt nach erfolgter Synchronisation der von dem ausgangsseitigen Stromrichter 20 erzeugten Wechselspannung an das öffentliche Stromversorgungsnetz 4 den Trennschalter 34. Damit ist der Betriebszustand der Fig. 3 erreicht. Erst jetzt wird der zweite Stromgenerator 14 und damit die Brennkraftmaschine 46 leistungsmäßig belastet.

Das System 1 ist somit in der Lage, autark zu starten und sich an das öffentliche Stromversorgungsnetz 4 anzuschließen. Alternativ zu dem Starten der Brennkraftmaschine 46 kann der zweite Stromgenerator 14 auch beispielsweise durch das Aufkommen von Wind in Bewegung gesetzt werden oder durch das Fließen von Wasser über eine mit dem zweiten Stromgenerator 14 verbundene Wasserturbine.

Wenn ausgehend von dem Betriebszustand der Fig. 3 die Leistung des zweiten Stromgenerator 14 abfällt, beispielsweise weil die Brennkraftmaschine 46 zum stehen kommt oder die Sonneneinstrahlung oder der Wind nachlässt, sinkt die elektrische Spannung auf den Zwischenkreis 10. Wenn die Spannung auf den Zwischenkreis 10 einen ersten Spannungswert unterschreitet, wird der ausgangsseitige Stromrichter 20 von der Steuereinheit 30 abgeschaltet. Dementsprechend wird keine Energie in das Stromversorgungsnetz 2 eingespeist. Sinkt die Spannung auf den Zwischenkreis 10 unter einen zweiten Spannungswert, wird auch die Spannungsversorgung 42 abgeschaltet und damit das System 1 insgesamt abgeschaltet, das daraufhin in einen Stand-by-Betrieb übergeht, wobei der Energieverbrauch des Systems 1 im Stand-by-Betrieb vorzugsweise im Wesentlichen Null beträgt.

Wenn ausgehend vom Betriebszustand der Fig. 3 das System 1 einen Wegfall des öffentlichen Stromversorgungsnetzes 4 detektiert, oder wenn durch Öffnen des Schalters 44 ein solcher Ausfall simuliert wird oder die Trennung von dem öffentlichen Stromversorgungsnetz 4 gesteuert herbeigeführt werden soll, öffnet das System 1 den Trennschalter 34 und trennt damit das System 1 vom öffentlichen Stromversorgungsnetz 4. Daraufhin versorgt das System 1 weiterhin das lokale Netz 6 mit elektrischer Energie, solange dem System 1 durch einen der Stromgeneratoren 12, 14 oder durch den Stromspeicher 16 eingangsseitig ausreichend elektrische Energie zur Verfügung gestellt wird. Dies entspricht dem Betriebszustand der Fig. 4. Die Weiterversorgung des lokalen Netzes 6 bei Trennung von dem öffentlichen Stromversorgungsnetz 4 erfolgt ohne nennenswerte Lastunterbrechung, insbesondere beträgt die Zeitdauer des Umschaltvorgangs weniger als 1 Sekunde, insbesondere weniger als 0,5 Sekunden und vorzugsweise weniger als 0,1 Sekunden.

## Patentansprüche

1. System (1) zur Einspeisung elektrischer Energie in ein Stromversorgungsnetz (2), wobei das System (1) einen Gleichspannungs-Zwischenkreis (10) aufweist, mit dessen Eingangsseite mehrere Stromgeneratoren (1 2, 14) und/oder Stromspeicher (16) über jeweils einen Stromrichter (22, 24, 26) verbindbar sind, und dessen Ausgangsseite über einen Wechselrichter (20) mit dem Stromversorgungsnetz (2) verbindbar ist, **dadurch gekennzeichnet, dass** das System (1) einen gemeinsamen Wärmekreis aufweist, in die die Abwärme der Stromrichter (22, 24, 26) und des Wechselrichters (20) des Systems (1) eingespeist wird, die über Wärmetauscher zum Heizen von Räumen, Aufwärmen von Leitungswassern, und/oder zum Temperieren des Stromspeichers (16) zur Erhöhung der Leistungsfähigkeit auch bei geringen Außentemperaturen nutzbar ist.

2. System (1) nach Anspruch 1, **dadurch gekennzeichnet, dass** die Spannung auf dem Gleichspannungs-Zwischenkreis (10) mehr als 200 V, insbesondere mehr als 300 V und vorzugsweise mehr als 400 V beträgt.

3. System (1) nach einem der vorstehenden Ansprüche, **dadurch gekennzeichnet, dass** das System (1) auf der Eingangsseite des Gleichspannungs-Zwischenkreises (10) mindestens einen Gleichspannungswandler aufweist, durch den ein Photovoltaik-Stromgenerator (1 2) oder ein elektrochemischer Stromspeicher (1 6) mit dem Gleichspannungs-Zwischenkreis (10) verbindbar ist, und dass das System (1) auf der Eingangsseite des Gleichspannungs-Zwischenkreises (10) weiterhin einen Gleichrichter oder einen bidirektionalen Wechselrichter aufweist, durch den ein mechanisch-elektrischer Stromgenerator (14) mit dem Gleichspannungs-Zwischenkreis (10) verbindbar ist, oder einen weiteren Gleichspannungswandler aufweist, durch den ein weiterer Photovoltaik-Stromgenerator (1 2) oder ein weiterer Stromspeicher (1 6) mit dem Gleichspannungs-Zwischenkreis (10) verbindbar ist.

4. System (1) nach einem der vorstehenden Ansprüche, **dadurch gekennzeichnet, dass** das Stromversorgungsnetz (2) ein öffentliches Stromversorgungsnetz (4) und ein lokales Netz (6) umfasst, die beide mit dem Wechselrichter (20) verbindbar sind, und dass das System (1) einen zwischen dem Wechselrichter (20) und dem öffentlichen Stromversorgungsnetz (4) angeordneten steuerbaren Trennschalter (34) aufweist, mittels dem der Wechselrichter (20) vom öffentlichen Stromversorgungsnetz (4) trennbar ist.

5. System (1) nach Anspruch 4, **dadurch gekennzeichnet, dass** der Wechselrichter (20) über eine Netzverbindungsleitung (32) mit dem öffentlichen Stromversorgungsnetz (4) verbunden ist und dadurch ein Ausfall des öffentlichen Stromversorgungsnetzes (4) von dem Wechselrichter (20) und damit von dem System (1) detektierbar ist.

6. System (1) nach einem der vorstehenden Ansprüche, **dadurch gekennzeichnet, dass** das System (1) eine Steuereinheit (30) aufweist, die steuerungstechnisch mit den auf der Eingangsseite des Gleichspannungs-Zwischenkreises (10) angeordneten Stromrichtern (22, 24, 26) und/oder mit dem auf der Ausgangsseite des Gleichspannungs-Zwischenkreises (10) angeordneten Wechselrichter (20) verbunden ist.

7. System (1) nach Anspruch 6, **dadurch gekennzeichnet, dass** die Steuereinheit (30) eine Schnittstelle (36) für den Anschluss an ein vorzugsweise öffentliches Datennetz (38) aufweist und über das Datennetz (38) bidirektional Daten mit einem Terminal (40) austauschbar sind, das mit dem Datennetz (38) verbunden ist.

8. System (1) nach Anspruch 6 oder 7, **dadurch gekennzeichnet, dass** die Steuereinheit (30) zur Versorgung mit elektrischer Energie mit dem Gleichspannungs-Zwischenkreis (10) verbunden ist.

9. System (1) nach einem der Ansprüche 6 bis 8, **dadurch gekennzeichnet, dass** das System (1) eine Spannungsversorgung (42) aufweist, insbesondere ein Schaltnetzteil, das eingangsseitig mit dem Gleichspannungs-Zwischenkreis (10) verbunden ist und ausgangsseitig mit der Steuereinheit (30) verbunden ist.

10. System (1) nach einem der vorstehenden Ansprüche, **dadurch gekennzeichnet, dass** das System (1) einen gemeinsamen Wärmekreis aufweist, in dem die Wärmemedien und/oder Kühlmedien von mehreren und vorzugsweise von allen an das System (1) anschließbaren Stromgeneratoren (12, 14) zusammenführbar sind.

## Claims

1. System (1) for feeding electrical energy into a power supply network (2), where the system (1) has a DC link (10) to whose input side several power generators (12, 14) and/or storage batteries (16) are connectable via one power converter (22, 24, 26) each, and whose output side is connectable to the power supply network (2) via a power inverter (20), **characterized in that** the system (1) has a common heat circuit into which the waste heat of the power converters (22, 24, 26) and of the power inverter (20) of the system (1) is fed and is usable via heat exchangers for heating rooms, heating up tap water, and/or for temperature control of the storage battery (16) to increase efficiency even at low outside temperatures.

2. System (1) according to claim 1, **characterized in that** the voltage on the DC link (10) is more than 200 V, in particular more than 300 V and preferably more than 400 V.

3. System (1) according to one of the above claims, **characterized in that** the system (1) has on the input side of the DC link (10) at least one DC converter by which a photovoltaic power generator (12) or an electrochemical storage battery (16) is connectable to the DC link (10), and **in that** the system (1) furthermore has on the input side of the DC link (10) a rectifier or a bidirectional power inverter by which a mechanical-electrical power generator (14) is connectable to the DC link (10), or has a further DC converter by which a further photovoltaic power generator (12) or a further storage battery (16) is connectable to the DC link (10).

4. System (1) according to one of the above claims, **characterized in that** the power supply network (2) comprises a public power supply network (4) and a local network (6) which are both connectable to the power inverter (20), and **in that** the system (1) has a controllable circuit-breaker (34) arranged between the power inverter (20) and the public power supply network (4) and by means of which the power inverter (20) is disconnectable from the public power supply network (4).

5. System (1) according to claim 4, **characterized in that** the power inverter (20) is connected to the public power supply network (4) via a network connection line (32) and hence a failure of the public power supply network (4) is detectable by the power inverter (20) and hence by the system (1).

6. System (1) according to one of the above claims, **characterized in that** the system (1) has a control unit (30) which is connected to the power converters (22, 24, 26) arranged on the input side of the DC link (10) and/or to the power inverter (20) arranged on the output side of the DC link (10) so as to control them.

7. System (1) according to claim 6, **characterized in that** the control unit (30) has an interface (36) for connection to a preferably public data network (38) and where data are bidirectionally exchangeable via the data network (38) through a terminal (40) which is connected to said data network (38).

8. System (1) according to claim 6 or 7, **characterized in that** the control unit (30) is connected to the DC link (10) for supply with electrical energy.

9. System (1) according to one of claims 6 to 8, **characterized in that** the system (1) has a voltage supply (42), in particular a switched-mode power supply, which is connected on the input side to the DC link (10) and on the output side to the control unit (30).

10. System (1) according to one of the above claims, **characterized in that** the system (1) has a common heat circuit in which the heating media and/or cooling media from several and preferably from all power generators (12, 14) connectable to the system (1) are combinable.

## Revendications

1. Système (1) pour injecter de l'énergie électrique dans un réseau de distribution électrique (2), sachant que le système (1) présente un circuit intermédiaire à tension continue (10) au côté d'entrée duquel plusieurs générateurs de courant (12, 14) et/ou des accumulateurs de courant (16) sont reliables par le biais de chaque fois un convertisseur (22, 24, 26) et dont le côté de sortie est reliable au réseau de distribution électrique (2) par le biais d'un onduleur (20), **caractérisé en ce que** le système (1) présente un circuit de chauffage commun dans lequel est injecté la chaleur dissipée des convertisseurs (22, 24, 26) et de l'onduleur (20) du système (1), laquelle chaleur est utilisable, par le biais d'échangeurs thermiques, pour chauffer des locaux, réchauffer de l'eau domestique et/ou pour mettre à température l'accumulateur de courant (16) afin d'augmenter ses performances même en cas de températures extérieures basses.

2. Système (1) selon la revendication 1, **caractérisé en ce que** la tension sur le circuit intermédiaire à tension continue (10) est supérieure à 200 V, notamment supérieure à 300 V et de préférence supérieure à 400 V.

3. Système (1) selon une des revendications précédentes, **caractérisé en ce que** le système (1) présente côté entrée du circuit intermédiaire à tension continue (10) au moins un convertisseur de tension continue par le biais duquel un générateur photovoltaïque (12) ou un accumulateur de courant électrochimique (16) est reliable au circuit intermédiaire à tension continue (10) et que le système (1) côté entrée du circuit intermédiaire à tension continue (10) présente de plus un redresseur ou un onduleur bidirectionnel par le biais duquel un générateur de courant mécano-électrique (14) est reliable au circuit intermédiaire à tension continue (10) ou présente un autre convertisseur de tension continue par le biais duquel un autre générateur photovoltaïque (12) ou un autre accumulateur de courant (16) est reliable au circuit intermédiaire à tension continue (10).

4. Système (1) selon une des revendications précédentes, **caractérisé en ce que** le réseau de distribution électrique (2) comprend un réseau public de distribution électrique (4) et un réseau local (6), les deux étant reliables à l'onduleur (20) et que le système (1) présente un disjoncteur (34) commandable, disposé entre l'onduleur (20) et ledit réseau public de distribution électrique (4), au moyen duquel l'onduleur (20) est séparable dudit réseau public de distribution électrique (4).

5. Système (1) selon la revendication 4, **caractérisé en ce que** l'onduleur (20) est relié au réseau public de distribution électrique (4) par le biais d'un câble de raccordement au réseau (32) et qu'ainsi une coupure du réseau public de distribution électrique (4) est détectable par l'onduleur (20) et donc par le système (1).

6. Système (1) selon une des revendications précédentes, **caractérisé en ce que** le système (1) présente une unité de commande (30) qui, sur le plan de la technique de commande, est reliée aux convertisseurs (22, 24, 26) disposés côté entrée du circuit intermédiaire à tension continue (10) et/ou à l'onduleur (20) disposé côté sortie du circuit intermédiaire à tension continue (10).

7. Système (1) selon la revendication 6, **caractérisé en ce que** l'unité de commande (30) présente une interface (36) pour le raccord de préférence à un réseau public de données (38) et que par le biais dudit réseau de données (38), des données sont échangeables de manière bidirectionnelle à travers un terminal (40) qui est relié au réseau de données (38).

8. Système (1) selon la revendication 6 ou 7, **caractérisé en ce que** l'unité de commande (30) est reliée au circuit intermédiaire à tension continue (10) pour l'alimentation en énergie électrique.

9. Système (1) selon la revendication 6 à 8, **caractérisé en ce que** le système (1) présente une alimentation en tension (42), notamment une alimentation à découpage, qui est reliée côté entrée au circuit intermédiaire à tension continue (10) et côté sortie à l'unité de commande (30).

10. Système (1) selon une des revendications précédentes, **caractérisé en ce que** le système (1) présente un circuit de chauffage commun dans lequel les fluides de chauffage et/ou les fluides de refroidissement de plusieurs, de préférence de tous les générateurs de courant (12, 14) raccordables au système (1), peuvent être regroupés.
